# EUROPEAN PATENT APPLICATION

(11) **EP 4 759 678 A1**
(43) Date of publication of application: **17.06.2026**
(21) Application number: 25220592.7
(22) Date of filing: 03.12.2025
(51) Int. Cl.: B62D 15/02, B60Q 1/48

(54) **PARKING ASSISTANCE METHOD AND APPARATUS, ELECTRONIC DEVICE, AND STORAGE MEDIUM**

(30) Priority: 10.12.2024 CN 202411812991
(71) Applicant: Faurecia Clarion Electronics (Xiamen) Co., Ltd., Xiamen Fujian (CN)
(72) Inventor: FAN, Minghui, Xiamen, Fujian (CN); KANG, Huaping, Xiamen, Fujian (CN); ZHUANG, Lin, Xiamen, Fujian (CN); WANG, Wenlin, Xiamen, Fujian (CN)
(74) Representative: Pfenning, Meinig & Partner mbB

(57) **Abstract**

A parking assistance method and apparatus, an electronic device, and a storage medium are disclosed in the present disclosure. The method includes: acquiring illumination intensity of a target environment in which a target vehicle is located; and in response to the illumination intensity being lower than or equal to an illumination intensity threshold, controlling a projection lamp of the target vehicle to project a parking space projection box at a target position, where the target position is a position of the parking space projection box in the target environment, the parking space projection box is used to assist the target vehicle in parking, and position information of the target position remains unchanged during a parking process of the target vehicle.

## Description

### TECHNICAL FIELD

The present disclosure relates to the technical field of self-driving, and in particular, to a parking assistance method and apparatus, an electronic device, and a storage medium.

### BACKGROUND

At present, after a user drives a vehicle to a destination, the user may search for a parking space near the destination, and park the vehicle in the parking space.

### SUMMARY

In a first aspect, a parking assistance method is provided in the present disclosure, which includes: acquiring illumination intensity of a target environment in which a target vehicle is located; and in response to the illumination intensity being lower than or equal to an illumination intensity threshold, controlling a projection lamp of the target vehicle to project a parking space projection box at a target position, where the target position is a position of the parking space projection box in the target environment, the parking space projection box is used to assist the target vehicle in parking, and position information of the target position remains unchanged during a parking process of the target vehicle.

In a second aspect, a parking assistance apparatus is provided in the present disclosure, which includes: an acquisition module and a control module; the acquisition module is configured to acquire illumination intensity of a target environment in which a target vehicle is located; and the control module is configured, in response to the illumination intensity being lower than or equal to an illumination intensity threshold, to control a projection lamp of the target vehicle to project a parking space projection box at a target position, where the target position is a position of the parking space projection box in the target environment, the parking space projection box is used to assist the target vehicle in parking, and position information of the target position remains unchanged during a parking process of the target vehicle.

In a third aspect, an electronic device is provided in the present disclosure, which includes a processor and a memory configured to store instructions executable for the processor; where the processor is configured to execute the instructions to implement the parking assistance method in the above-mentioned first aspect.

In a fourth aspect, a computer-readable storage medium is provided in the present disclosure, and the computer-readable storage medium stores instructions. Upon the instructions in the computer-readable storage medium being executed by an electronic device, the electronic device is caused to perform the parking assistance method in the above-mentioned first aspect.

In a fifth aspect, a computer program product, which includes computer programs or instructions, is provided in the present disclosure. Upon the computer programs or instructions being run on an electronic device, the electronic device is caused to perform the parking assistance method in the above-mentioned first aspect.

In a sixth aspect, a vehicle is provided in the present disclosure, which includes the electronic device provided in the present disclosure.

These and other aspects of the present disclosure may become more apparent from the following description.

### BRIEF DESCRIPTION OF THE DRAWINGS

In order to illustrate technical solutions in the embodiments of the present disclosure more clearly, the accompanying drawings needed to be used in descriptions for the embodiments will be introduced briefly. Obviously, the accompanying drawings in the description below are merely a portion of accompanying drawings of some embodiments of the present disclosure, and for a person of ordinary skill in the art may obtain other accompanying drawings according to these accompanying drawings without paying any creative effort.
FIG. 1 is a schematic diagram of internal structures of an electronic device provided in the embodiments of the present disclosure.
FIG. 2 is a flowchart of a parking assistance method provided in the embodiments of the present disclosure.
FIG. 3 is a schematic diagram of a scenario for a projection lamp projecting a parking space projection box provided in the embodiments of the present disclosure.
FIG. 4 is a schematic diagram of a scenario for installation positions of projection lamps provided in the embodiments of the present disclosure.
FIG. 5 is a schematic diagram of a scenario for a parking assistance method provided in the embodiments of the present disclosure.
FIG. 6 is a flowchart of another parking assistance method provided in the embodiments of the present disclosure.
FIG. 7 is a schematic diagram of a scenario for a target projection range provided in the embodiments of the present disclosure.
FIG. 8 is a schematic diagram of a scenario for performing projection processing on a projection content provided in the embodiments of the present disclosure.
FIG. 9 is a flowchart of yet another parking assistance method provided in the embodiments of the present disclosure.
FIG. 10 is a schematic diagram of coordinates of a target vehicle for displacement provided in the embodiments of the present disclosure.
FIG. 11 is a schematic diagram of a scenario for adjusting a projection content provided in the embodiments of the present disclosure.
FIG. 12 is a schematic diagram of a scenario for a parking space corner provided in the embodiments of the present disclosure.
FIG. 13 is a flowchart of yet another parking assistance method provided in the embodiments of the present disclosure.
FIG. 14 is a structural schematic diagram of a parking assistance apparatus provided in the embodiments of the present disclosure.
FIG. 15 is a structural schematic diagram of another parking assistance apparatus provided in the embodiments of the present disclosure.

### DETAILED DESCRIPTION

The technical solutions in the embodiments of the present disclosure will be described below clearly and completely in conjunction with the accompanying drawings. Obviously, the described embodiments are merely a part of the embodiments of the present disclosure, but not all of the embodiments of the present disclosure. All other embodiments obtained according to the embodiments of the present disclosure by those of ordinary skill in the art without paying any creative effort shall be included in the protection scope of the present disclosure.

Terms such as "first" and "second" are used for descriptive purposes only, and are not to be understood as indicating or implying a relative importance or implicitly indicating a number of indicated technical features. Thus, features limited with the wordings such as "first" or "second" may explicitly or implicitly include one or more of the features. In the description of the present disclosure, wordings "multiple", "a plurality of" or "the plurality of" mean a number of two or more than two unless otherwise specified.

In addition, the terms "comprise/include" and "have" mentioned in the description of the present disclosure, as well as any variations thereof, are intended to cover non-exclusive inclusions. For example, a process, a method, a system, a product or a device that includes a series of steps or units is not limited to the listed steps or units, but optionally further includes other unlisted steps or units, or optionally further includes other steps or units inherent to the process, the method, the product or the device.

It should be noted that in the embodiments of the present disclosure, wordings, such as "exemplarily" or "for example" and variations thereof are used to indicate examples, demonstrations, or illustrations. Any embodiment or design solution described with "exemplary" or "for example" and variations thereof in the present disclosure should not be illustrated as more preferred or advantageous embodiment or design solution over other embodiments or design solutions in the present disclosure. Specifically, the usage of wordings such as "exemplarily" or "for example" is intended to present relevant concepts in a concrete way.

The term "and/or" used in the present disclosure includes using either or both methods simultaneously.

In a case where the user need to park in the dim environment or unplanned parking spaces on the ground, the user cannot determine which regions or parking spaces are available for parking in, resulting in a poor parking experience. Based on this, a parking assistance method and apparatus, an electronic device, and a storage medium are provided in the embodiments of the present disclosure. The electronic device may assist the user in controlling the projection lamp in the target vehicle to project the parking space projection box (which may be understood as a parking space box/parking space of the target vehicle) at the target position (specifically the position of the parking space projection box in the target environment) to assist the parking process of the target vehicle, thereby reducing the difficulty of parking in the dim environment for the user, and improving the parking experience. In addition, since the position information of the target location remains unchanged during the parking process of the target vehicle, it can ensure that the parking process of the target vehicle is always based on an unchanged parking space, improving the safety of the parking/driving process.

Exemplarily, the electronic device for implementing the parking assistance method provided in the embodiments of the present disclosure may be various Internet of Things (IoT) devices such as a mobile phone, a smart vehicle, a floor cleaning robot, a television, etc. The electronic device may also be a pad, a desktop computer, a laptop, a hand-held computer, a notebook computer, an ultra-mobile personal computer (UMPC), a netbook, an in-vehicle computer/in-vehicle computing device, or a cellular phone, a personal digital assistant (PDA), an augmented reality (AR)/virtual reality (VR) device, and a specific form of the electronic device is not particularly limited in the embodiments of the present disclosure. The electronic device may interact with a user through one or more manners such as keyboard, touchpad, touch screen, remote controller, voice interaction, or handwriting device.

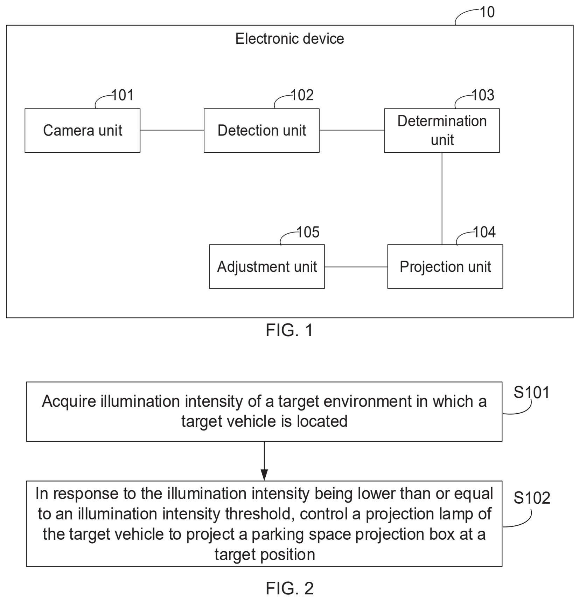

In some embodiments, an electronic device may be provided in the embodiments of the present disclosure. As shown in FIG. 1, the electronic device 10 may include a camera unit 101, a detection unit 102, a determination unit 103, a projection unit 104, and an adjustment unit 105.

Herein, the camera unit 101 is configured to capture a picture of a target environment in which a target vehicle is located, that is, a picture for surroundings around the target vehicle.

The detection unit 102 is configured to detect illumination intensity of the target environment and detect whether there is a physical parking space box in the target environment.

The determination unit 103 is configured to determine a target position (i.e., a position of the parking space projection box in the target environment) in response to the illumination intensity of the target environment being lower than or equal to an illumination intensity threshold.

The projection unit 104 is configured to control a projection lamp of the target vehicle to project the parking space projection box at the target position.

The adjustment unit 105 is configured to adjust a position of a projection content in the projection unit of the target vehicle and/or adjust a projection angle of the projection lamp.

The parking assistance method and apparatus, an electronic device, and a storage medium provided in the embodiments of the present disclosure are applied in self-driving scenarios or assisted driving scenarios. Specifically, in a case where the illumination intensity of the target environment is lower than or equal to the illumination intensity threshold, the electronic device may control the projection lamp of the target vehicle to project the parking space projection box at the target position (i.e., the position of the parking space projection box in the target environment) to assist the parking process of the target vehicle.

As shown in FIG. 2, the parking assistance method provided in the embodiments of the present disclosure includes S101-S102.

In S101, illumination intensity of a target environment in which a target vehicle is located is acquired.

It should be understood that the target vehicle is any vehicle used by a user (or a driver/passenger). The target environment may be surroundings or vicinity of the target vehicle.

Exemplarily, the above-mentioned target environment may be a parking lot, an underground garage, and a road section available for parking, etc.

In some embodiments, the illumination intensity in the embodiments of the present disclosure may also be light intensity.

In S102, in response to the illumination intensity being lower than or equal to an illumination intensity threshold, a projection lamp of the target vehicle is controlled to project a parking space projection box at a target position.

Herein, the target position is a position of the parking space projection box in the target environment, the parking space projection box is used to assist the target vehicle in parking, and position information of the target position remains unchanged during a parking process of the target vehicle.

It should be understood that the electronic device may determine whether the illumination intensity of the target environment is lower than or equal to the illumination intensity threshold after acquiring the illumination intensity. In a case where the illumination intensity is lower than or equal to the illumination intensity threshold, it means that the illumination intensity is relatively low, specifically due to the dim lighting of the target environment, and the light is insufficient to support the users in searching for a parking space and parking. At this time, the electronic device may control the projection lamp of the target vehicle to project the parking space projection box at the target position (i.e., the position of the parking space projection box in the target environment), thereby assisting the parking process of the target vehicle.

In addition, since the position information of the target position remains unchanged during the parking process of the target vehicle, it can ensure that the parking process of the target vehicle is always based on an unchanged parking space, thereby improving the safety of the parking/driving process.

In some embodiments, the electronic device may send a projection indication to the projection lamp to control the projection lamp to project the parking space projection box at the target position.

It should be understood that after the projection lamp projects the parking space projection box at the target position, a parking space box/parking spot may be formed at the target position, thus the user can park the target vehicle at the target position. At this time, the projection box of the parking space may be understood as a parking space box/parking space of the target vehicle.

In some embodiments, the electronic device may control all projection lamps in the target vehicle to project the parking space projection box at the target position; or may control a portion of projection lamps in the target vehicle to project the parking space projection box at the target position, positions and quantity of projection lamps for projecting the parking space projection box are not specifically limited in the embodiments of the present disclosure.

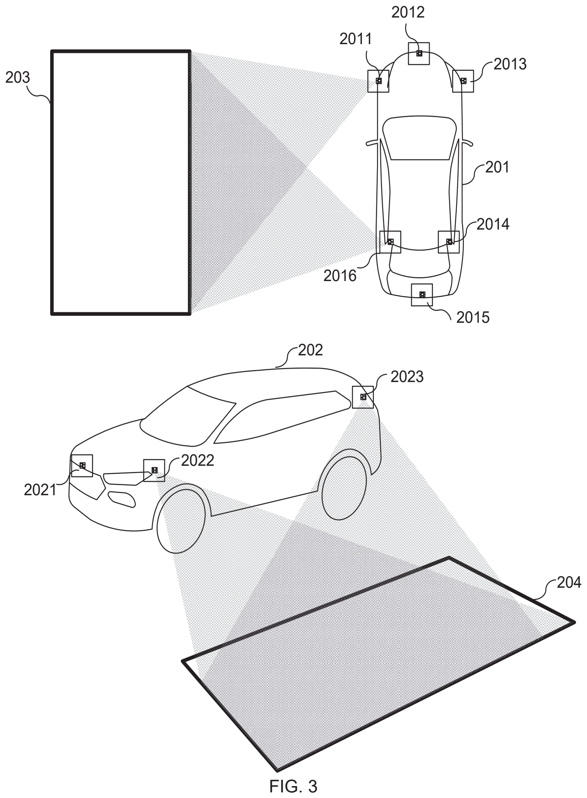

For example, as shown in FIG. 3, the vehicle 201 includes a projection lamp 2011, a projection lamp 2012, a projection lamp 2013, a projection lamp 2014, a projection lamp 2015, and a projection lamp 2016. The vehicle 202 includes a projection lamp 2021, a projection lamp 2022, and a projection lamp 2023.

The vehicle 201 projects the parking space projection box 203 through the projection lamp 2011 and the projection lamp 2016, while the vehicle 202 projects the parking space projection box 204 through the projection lamp 2022 and the projection lamp 2023.

In an implementation, the electronic device may determine a quantity of projection lamps included in the target vehicle based on parameters of the projection lamps and installation angles of the projection lamps.

Exemplarily, the quantity of projection lamps included in a vehicle may be 4 or 6.

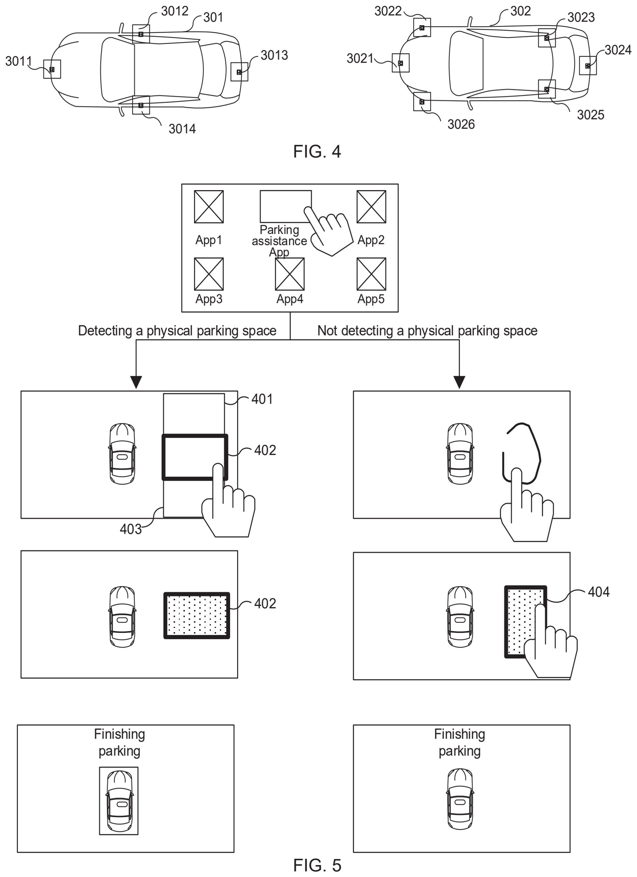

As shown in FIG. 4, the vehicle 301 includes four projection lamps, namely projection lamp 3011, projection lamp 3012, projection lamp 3013, and projection lamp 3014. Specifically, these four projection lamps may be installed in front, right, rear, and left of the vehicle 301, respectively.

The vehicle 302 includes six projection lamps, namely projection lamp 3021, projection lamp 3022, projection lamp 3023, projection lamp 3024, projection lamp 3025, and projection lamp 3026. Specifically, the six projection lamps may be installed in front, right front, right rear, right rear, left rear, and left front of vehicle 302, respectively.

The technical solutions provided in the above embodiments may at least bring the following beneficial effects: as shown in S101-S102, in a case where the illumination intensity of the target environment is lower than or equal to the illumination intensity threshold, it means that the target environment is dim, and the light is insufficient to support the users in searching for a parking space and parking. At this time, the electronic device may assist the user in controlling the projection lamp in the target vehicle to project the parking space projection box (which may be understood as a parking space box/parking space of the target vehicle) at the target position (specifically the position of the parking space projection box in the target environment) to assist the parking process of the target vehicle, thereby reducing the difficulty of parking in the dim environment for the user, and improving the parking experience. In addition, since the position information of the target position remains unchanged during the parking process of the target vehicle, it can ensure that the parking process of the target vehicle is always based on an unchanged parking space, thereby improving the safety of the parking/driving process.

In an implementation in the embodiments of the present disclosure, before the projection lamp of the control target vehicle is controlled to project the parking space projection box at the target position, the parking assistance method provided in the embodiments of the present disclosure may further include S103-S104.

In S103, in response to that there is no physical parking space box in the target environment, a virtual parking space box is generated based on other objects in the target environment.

It should be understood that the physical parking space box is a preset parking space box or parking space, and the other objects include other vehicles and obstacles in the target environment.

It can be understood that in a case where there is no physical parking space box in the target environment, it means that the target vehicle cannot park directly in the target environment. At this time, the electronic device may generate a virtual parking space box based on the other objects in the target environment.

In some embodiments, the electronic device may generate the virtual parking space box in regions excluding the regions where the other objects are located in the target environment.

In some other embodiments, the above-mentioned generating the virtual parking space box based on the other objects in the target environment may include S1031-S1032.

In S1031, a virtual environment corresponding to the target environment is displayed.

Herein, the virtual environment includes virtual objects corresponding to the other objects mentioned above.

Specifically, the electronic device may display the virtual environment on a center console (or display screen) of the electronic device.

It should be understood that position information of the virtual objects in the virtual environment corresponds to position information of the other objects in the target environment.

In S1032, in response to a preset operation on the virtual environment and/or the virtual objects, the virtual parking space box is generated.

Herein, the preset operation includes a sliding operation and a dragging operation.

Specifically, the user may perform the sliding operation and/or dragging operation on the virtual environment and/or virtual objects in the center console (or display screen) to generate the virtual parking space box.

In S104, a position of the virtual parking space box in the virtual environment is determined as the target position.

It should be understood that electronic device may map the position (or coordinates) of the virtual parking space box in the virtual environment to the target environment, thereby forming the above-mentioned parking space projection box. The position of the obtained parking space projection box in the target environment is the above-mentioned target position.

In another implementation in the embodiments of the present disclosure, before the above-mentioned controlling the projection lamp of the target vehicle to project the parking space projection box at the target position, the parking assistance method provided in the embodiments of the present disclosure may also include S105.

In S105, in response to that there is a physical parking space box in the target environment, a position of the physical parking space box in the target environment is determined as the target position.

It should be understood that in a case where there is a physical parking space in the target environment, it means that the target vehicle may be parked directly in the target environment, specifically may be parked within the physical parking space box. At this time, the electronic device determines the position of the physical parking space box in the target environment as the target position, so as to control the projection lamp to project the parking space projection box at the position of the physical parking space box in the target environment, specifically to project/display the physical parking space, thus to assist the user in completing the parking process of the target vehicle in the physical parking space.

In some embodiments, as shown in FIG. 5, the electronic device may first display applications (Apps) included in the electronic device, including App1, App2, a parking assistance App, App3, App4, and App5.

The user may enter a parking assistance system by clicking on the parking assistance App (which may also be understood as starting to execute the parking assistance method provided in the embodiments of the present disclosure). Afterwards, the electronic device may determine whether a physical parking space may be detected in the target environment.

In a case where the electronic device detects the physical parking space in the target environment (such as physical parking space 401, physical parking space 402, and physical parking space 403 shown in FIG. 5), the electronic device may determine a position of one of the physical parking spaces (i.e., the physical parking space 402 shown in FIG. 5) as the target position, thereby completing the parking process of the target vehicle.

In a case where the electronic device does not detect a physical parking space in the target environment, the electronic device may respond to the preset operation on the virtual environment and/or virtual objects. Specifically, the user may draw (or circle) a parking space box in the center console (or display screen) of the electronic device, so that the electronic device generates a virtual parking space box 404 and determines the position of the virtual parking space box 404 as the target position, thus the parking process of the target vehicle may also be completed.

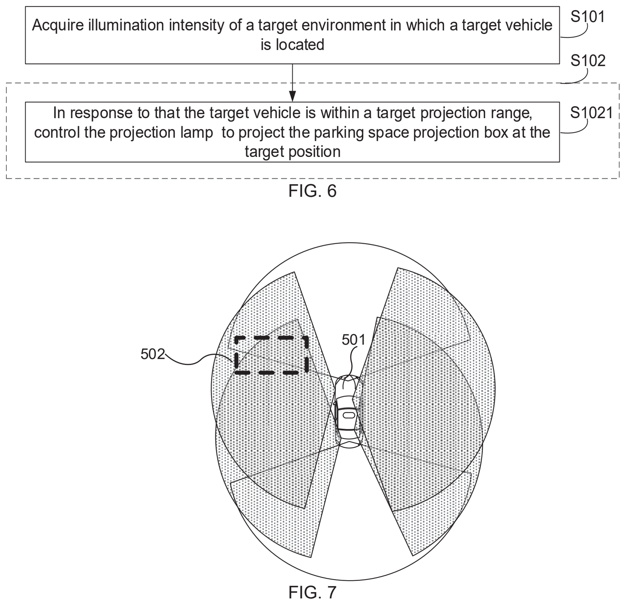

In combination with FIG. 2, as shown in FIG. 6, the above-mentioned controlling the projection lamp of the control target vehicle to project the parking space projection box at the target position may specifically include S1021.

In S1021, in response to that the target vehicle is within a target projection range, the projection lamp is controlled to project the parking space projection box at the target position.

Herein, the target projection range is composed of maximum projection ranges of respective projection lamps.

Specifically, the electronic device may determine a union of the maximum projection ranges of respective projection lamps in the target vehicle as the above-mentioned target projection range.

For example, a shaded part shown in FIG. 7 corresponds to the target projection range of the vehicle 501, and the parking space projection box projected by projection lamps of the vehicle 501 is the parking space projection box 502 in FIG. 7.

In an implementation, the electronic device may acquire projection contents of a plurality of projection lamps included in the target vehicle on the ground, and perform perspective processing on the projection contents respectively to ensure that the projection contents of the plurality of projection lamps on the ground overlaps and are consistent.

It should be understood that due to the different positions of different projection lamps on the vehicle, the contents projected by different projection lamps on the ground may be different. Through the above perspective processing, it is possible to make the contents from different projection lamps on the ground overlap.

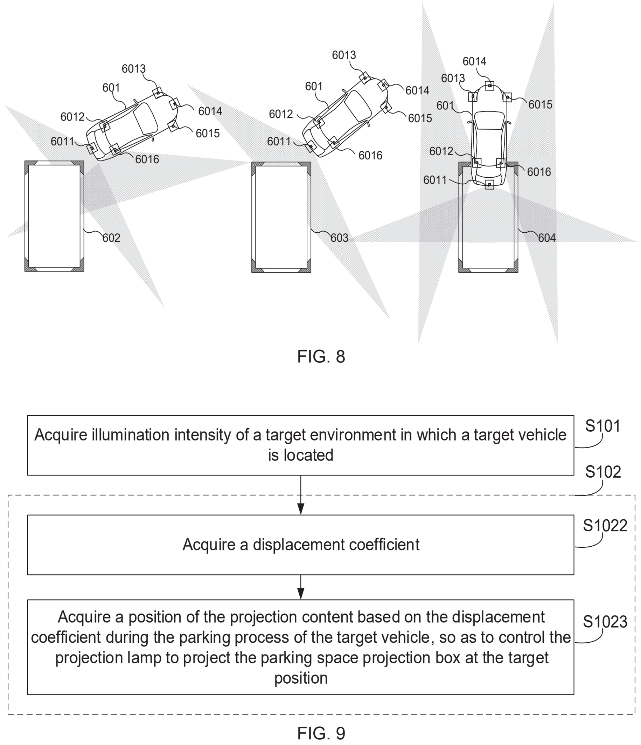

For example, as shown in FIG. 8, the vehicle 601 includes a projection lamp 6011, projection lamp 6012, projection lamp 6013, projection lamp 6014, projection lamp 6015, and projection lamp 6016.

The electronic device controls the projection lamp 6011 and projection lamp 6016 to project the parking space projection box as a parking space projection box 602, controls the projection lamp 6011 to project the parking space projection box as a parking space projection box 603, and controls the projection lamp 6011, projection lamp 6015, and projection lamp 6016 to project the parking space projection box as a parking space projection box 604.

Shapes, sizes, and positions of the three parking space projection boxes 602, 603, and 604 are the same.

In combination with FIG. 2, as shown in FIG. 9, the above-mentioned controlling the projection lamp of the control target vehicle to project the parking space projection box at the target position may specifically include S1022- S1023.

In S1022, a displacement coefficient is acquired.

Herein, the displacement coefficient is used to characterize a relationship between a first position change and a second position change, the first position change is used to characterize a change situation of the target vehicle travelling from an initial position to a current position, and the second position change is used to characterize a change situation of a projection content in a projection unit of the target vehicle from a first position to a second position, the projection content corresponds to the parking space projection box, the first position corresponds to the initial position, and the second position corresponds to the current position.

In an alternative implementation, since a displacement of the projection content in the projection unit is opposite to a displacement of the target vehicle, the electronic device may determine the above-mentioned displacement coefficient according to relative coordinates of the target vehicle before and after the displacement and relative coordinates of the projection lamp before and after the displacement.

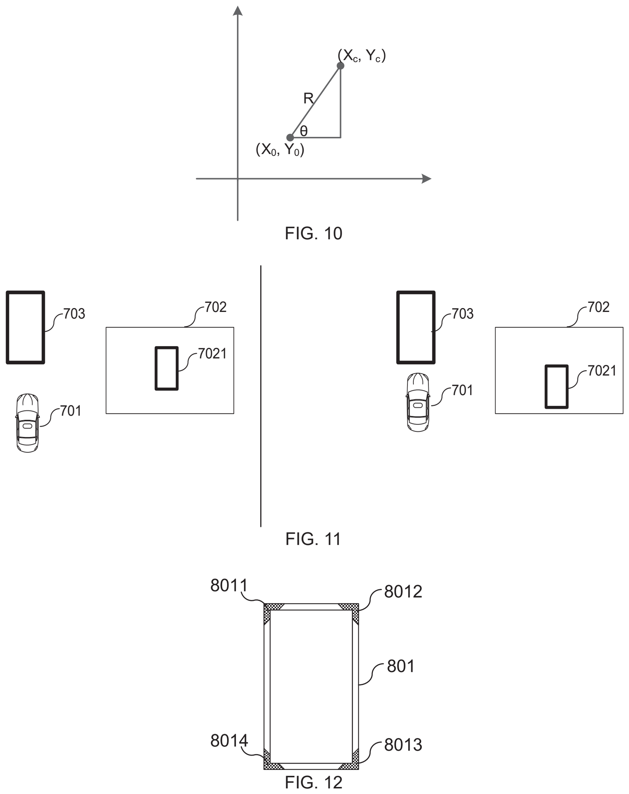

Exemplarily, as shown in FIG. 10, assuming that coordinates of the target vehicle at the initial position are (X₀, Y₀), coordinates of the target vehicle at the current position (i.e., a position after displacement) are (X_{c}, Y_{c}), a straight-line distance before and after displacement of the target vehicle is R, and a displacement center angle is θ.

Herein, X_{C}=X₀+R*cos θ , Y_{C}=Y₀+R*sin θ.

Assuming that a displacement of a projection lamp in the X direction is Sₓ and a displacement in the Y direction is S_{y}.

Due to the fact that the displacement direction of the projection lamp is opposite to the displacement direction of the target vehicle, and the displacement direction of the projection lamp is equal to displacement coordinates of the target vehicle multiplied by the displacement coefficient, displacement coordinates of the projection lamp are (-k₀X_{c}, -k₀Y_{c}), which may be converted to [-k₀ (X₀+R*cosθ), -k₀ (Y₀+R*sinθ)].

In summary, Sₓ= k₀ (X₀+R*cos θ ), S_{y}= k₀ (Y₀+R*sin θ ).

Herein, k₀ represents the above-mentioned displacement coefficient.

In S1023, a position of the projection content is adjusted based on the displacement coefficient during the parking process of the target vehicle, so as to control the projection lamp to project the parking space projection box at the target position.

Exemplarily, as shown in FIG. 11, as the position of the vehicle 701 changes, the electronic device may adjust the position of the projection content 7021 in the projection unit 702 based on the displacement coefficient, thereby ensuring that the position information of the parking space projection box 703 remains unchanged.

In some embodiments, in a case of a parking action beginning, the projection lamp may adjust the projection angle of the projection lamp in real time according to a parking space corner of the parking space projection box (specifically the four top corner angles of the parking space projection box), so that the position information of the target position remains unchanged during the parking process of the target vehicle.

For example, as shown in FIG. 12, the parking space projection box 801 includes four parking space corners, namely parking space corner 8011, parking space corner 8012, parking space corner 8013, and parking space corner 8014.

In one implementation in the embodiments of the present disclosure, after acquiring the illumination intensity of the target environment in which the target vehicle is located, the parking assistance method provided in the embodiments of the present disclosure further includes step A.

Step A: in response to the illumination intensity being lower than or equal to the illumination intensity threshold, the electronic device controls the projection lamp to project a preset pattern in the target environment.

Herein, the preset pattern is used to prompt a parking position of the target vehicle.

For example, the preset pattern may be square or circular.

It should be understood that by projecting the preset pattern in the target environment, not only can the user facilitate the parking process of the target vehicle, but also alert personnel in the target environment, to improve safety during the parking process.

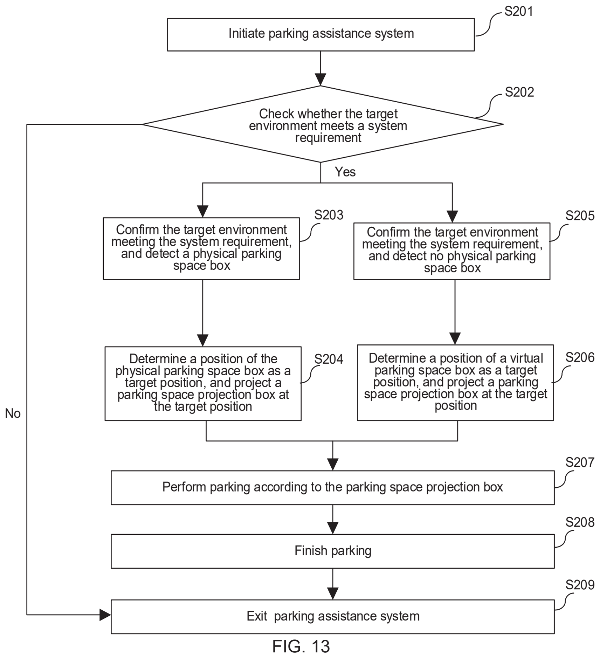

The following provides a complete example to illustrate the parking assistance method provided in the embodiments of the present disclosure, as shown in FIG. 13, the parking assistance method provided in the embodiments of the present disclosure may include S201-S209.

In S201, parking assistance system is initiated.

Specifically, in response to a click operation from the user on the parking assistance system (specifically the parking assistance app), the electronic device may initiate the parking assistance system.

In S202, whether the target environment meets a system requirement is checked.

Specifically, the electronic device may determine whether illumination intensity of the target environment is lower than or equal to an illumination intensity threshold.

In S203, the target environment meeting the system requirement is confirmed, and a physical parking space box is detected.

In S204, a position of the physical parking space box is determined as a target position, and a parking space projection box is projected at the target position.

In S205, the target environment meeting the system requirement is confirmed, and no physical parking space box is detected.

In S206, a position of a virtual parking space box is determined as the target position, and the parking space projection box is projected at the target position.

At this time, the virtual parking space box is a user-defined parking space box, that is, the projection lamp may project the user-defined parking space box at the target position.

In S207, parking is performed according to the parking space projection box.

In S208, parking is finished.

In S209, the parking assistance system is exited.

In addition, if the target environment does not meet the system requirement, specifically in a case where the illumination intensity of the target environment is greater than the illumination intensity threshold, it means that there is no need to rely on the parking assistance system, and the user may search for a parking space and perform parking by himself/herself, and the parking assistance system may also be exited at this time.

The embodiments of the present disclosure may divide the electronic device into functional modules according to the above method examples. For example, division of various functional modules may be performed corresponding to various functions, or two or more functions may be integrated into one processing module. The above-mentioned integrated module may be implemented in the form of hardware, or may be implemented in the form of software functional module. It should be noted that the division of the modules in the embodiments of the present disclosure is illustrated, which is only a logical functional division, and there may be other division manners in an actual implementation.

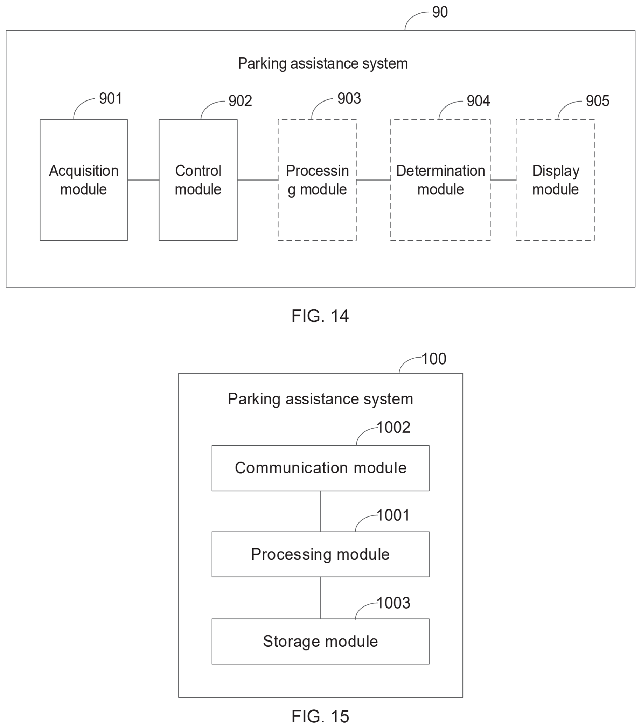

In the case of dividing various functional modules with corresponding functions, FIG. 14 shows a structural schematic diagram of a parking assistance apparatus involved in the above-mentioned embodiments. As shown in FIG. 14, the parking assistance apparatus 90 may include: an acquisition module 901 and a control module 902.

The acquisition module 901 is configured to acquire illumination intensity of a target environment in which a target vehicle is located.

The control module 902 is configured to, in response to the illumination intensity being lower than or equal to an illumination intensity threshold, control a projection lamp of the target vehicle to project a parking space projection box at a target position, wherein the target position is a position of the parking space projection box in the target environment, the parking space projection box is used to assist the target vehicle in parking, and position information of the target position remains unchanged during a parking process of the target vehicle.

In some embodiments, the above-mentioned parking assistance apparatus 90 may further include a processing module 903 and a determination module 904.

The processing module 903 is configured, in response to that there is no physical parking space box in the target environment, to generate a virtual parking space box based on other objects in the target environment.

The determination module 904 is configured to determine a position of the virtual parking space box in a virtual environment corresponding to the target environment as the target position.

In some embodiments, the above-mentioned parking assistance apparatus 90 further includes a display module 905.

The display module 905 is configured to display the virtual environment, where the virtual environment includes virtual objects corresponding to the other objects.

The processing module 903 is specifically configured, in response to a preset operation on the virtual environment and/or the virtual objects, to generate the virtual parking space box, where the preset operation comprises a sliding operation and a dragging operation.

In some embodiments, the determination module 904 is configured, in response to that there is a physical parking space box in the target environment, to determine a position of the physical parking space box in the target environment as the target position.

In some embodiments, the control module 902 is specifically configured, in response to that the target vehicle is within a target projection range, to control the projection lamp to project the parking space projection box at the target position, where the target projection range is composed of maximum projection ranges of respective projection lamps.

In some embodiments, the acquisition module 901 is further configured to acquire a displacement coefficient, where the displacement coefficient is used to characterize a relationship between a first position change and a second position change, the first position change is used to characterize a change situation of the target vehicle travelling from an initial position to a current position, and the second position change is used to characterize a change situation of a projection content in a projection unit of the target vehicle from a first position to a second position, the projection content corresponds to the parking space projection box, the first position corresponds to the initial position, and the second position corresponds to the current position.

The control module 902 is specifically configured to adjust a position of the projection content based on the displacement coefficient during the parking process of the target vehicle, so as to control the projection lamp to project the parking space projection box at the target position.

In some embodiments, the control module 902 is further configured, in response to the illumination intensity being lower than or equal to the illumination intensity threshold, to control the projection lamp to project a preset pattern in the target environment, where the preset pattern is used to prompt a parking position of the target vehicle.

In the case of using integrated units, FIG. 15 shows a structural schematic diagram of the parking assistance apparatus involved in the above-mentioned embodiments. As shown in FIG. 15, the parking assistance apparatus 100 may include a processing module 1001 and a communication module 1002. The processing module 1001 may be configured to control and manage actions of the parking assistance apparatus 100. The communication module 1002 may be configured to support communication between the parking assistance apparatus 100 and other entities. In some embodiments, as shown in FIG. 15, the parking assistance apparatus 100 may further include a storage module 1003 for storing program codes and data of the parking assistance apparatus 100.

Herein, the processing module 1001 may be a processor or a controller. The communication module 1002 may be a transceiver, a transceiver circuit, or a communication interface, etc. The storage module 1003 may be a memory.

Herein, in a case where the processing module 1001 is a processor, the communication module 1002 is a transceiver, and the storage module 1003 is a memory, the processor, transceiver, and memory may be connected through a bus. The bus may be a peripheral component interconnect (PCI) bus or an extended industry standard architecture (EISA) bus, etc. The bus may be classified as an address bus, a data bus, a control bus, or the like.

It should be understood that, in the various embodiments of the present disclosure, orders of the sequence numbers of the above-mentioned processes do not mean an order of execution, the order of execution of the processes shall be determined by their functions and inherent logic, and shall not constitute any limitation on the implementation processes of the embodiments of the present disclosure.

Those ordinary skilled in the art may realize that, units and algorithm steps of the examples described in combination with the embodiments disclosed herein can be implemented in electronic hardware or in a combination of computer software and electronic hardware. Whether these functions are performed by hardware or software depends on specific application and design constraints of the technical solutions. A skilled person may use different methods for each specific application, to implement the described functions, but such implementation should not be considered beyond the scope of the present disclosure.

It may be clearly understood by those skilled in the art that, for convenience and brevity of the description, specific working procedures of the systems, the apparatuses and the units described above may refer to the corresponding procedures in the above method embodiments, which will not be repeated herein.

The units illustrated as separate components may be or may not be physically separated, and the components shown as units may be or may not be physical units, that is, they may be located in one place, or may also be distributed among a plurality of network units. A portion or all of the units may be selected according to actual needs to implement the purpose of the embodiments.

The above embodiments may be implemented in whole or in part by software, hardware, firmware, or any combination thereof. In a case of being implemented using software programs, it may be fully or partially implemented in the form of a computer program product. The computer program product includes one or more computer instructions. In a case of loading and executing computer program instructions on a computer, all or a portion of the processes or functions described in the embodiments of the present disclosure are generated. The computer may be a general-purpose computer, a dedicated computer, a computer network, or any other programmable apparatuses. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that may be accessed by the computer, or a data storage device, such as a server or a data center including one or more available medium. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

The above description is only a specific implementation of the embodiments of the present disclosure, but the protection scope of the embodiments of the present disclosure is not limited thereto, and any skilled in the art familiar with this technical field may easily think of changes or substitutions within the technical scope disclosed in the embodiments of the present disclosure, which should be all covered within the protection scope of the embodiments of the present disclosure. Therefore, the protection scope of the present disclosure should be subject to the protection scope of the claims.

## Claims

1. A parking assistance method, **characterized by** comprising:
acquiring (S101) illumination intensity of a target environment in which a target vehicle is located; and
in response to the illumination intensity being lower than or equal to an illumination intensity threshold, controlling (S102) a projection lamp of the target vehicle to project a parking space projection box at a target position, wherein the target position is a position of the parking space projection box in the target environment, the parking space projection box is used to assist the target vehicle in parking, and position information of the target position remains unchanged during a parking process of the target vehicle.

2. The method according to claim 1, wherein the method further comprises:
in response to that there is no physical parking space box in the target environment, generating a virtual parking space box based on other objects in the target environment; and
determining a position of the virtual parking space box in a virtual environment corresponding to the target environment as the target position.

3. The method according to claim 2, wherein generating the virtual parking space box based on the other objects in the target environment comprises:
displaying the virtual environment, wherein the virtual environment comprises virtual objects corresponding to the other objects; and
in response to a preset operation on the virtual environment and/or the virtual objects, generating the virtual parking space box, wherein the preset operation comprises a sliding operation and a dragging operation.

4. The method according to claim 1, wherein the method further comprises:
in response to that there is a physical parking space box in the target environment, determining a position of the physical parking space box in the target environment as the target position.

5. The method according to claim 1, wherein controlling the projection lamp of the target vehicle to project the parking space projection box at a target position comprises:
in response to that the target vehicle is within a target projection range, controlling (S1 021) the projection lamp to project the parking space projection box at the target position, wherein the target projection range is composed of maximum projection ranges of respective projection lamps.

6. The method according to claim 1, wherein controlling the projection lamp of the target vehicle to project the parking space projection box at a target position comprises:
acquiring (S1022) a displacement coefficient, wherein the displacement coefficient is used to characterize a relationship between a first position change and a second position change, the first position change is used to characterize a change situation of the target vehicle travelling from an initial position to a current position, and the second position change is used to characterize a change situation of a projection content in a projection unit (104) of the target vehicle from a first position to a second position, the projection content corresponds to the parking space projection box, the first position corresponds to the initial position, and the second position corresponds to the current position; and
adjusting (S1023) a position of the projection content based on the displacement coefficient during the parking process of the target vehicle, so as to control the projection lamp to project the parking space projection box at the target position.

7. The method according to any one of claims 1 to 6, wherein after acquiring the illumination intensity of the target environment in which the target vehicle is located, the method further comprises:
in response to the illumination intensity being lower than or equal to the illumination intensity threshold, controlling the projection lamp to project a preset pattern in the target environment, wherein the preset pattern is used to prompt a parking position of the target vehicle.

8. A parking assistance apparatus (90), **characterized by** comprising an acquisition module (901) and a control module (902);
wherein the acquisition module (901) is configured to acquire illumination intensity of a target environment in which a target vehicle is located; and
the control module (902) is configured, in response to the illumination intensity being lower than or equal to an illumination intensity threshold, to control a projection lamp of the target vehicle to project a parking space projection box at a target position, wherein the target position is a position of the parking space projection box in the target environment, the parking space projection box is used to assist the target vehicle in parking, and position information of the target position remains unchanged during a parking process of the target vehicle.

9. The apparatus (90) according to claim 8, wherein the apparatus further comprises a processing module (903) and a determination module (904), wherein
the processing module (903) is configured, in response to that there is no physical parking space box in the target environment, to generate a virtual parking space box based on other objects in the target environment; and
the determination module (904) is configured to determine a position of the virtual parking space box in a virtual environment corresponding to the target environment as the target position; wherein
t he apparatus further comprises a display module (905), wherein
t he display module (905) is configured to display the virtual environment, wherein the virtual environment comprises virtual objects corresponding to the other objects; and
t he processing module (903) is configured, in response to a preset operation on at least one of the virtual environment or the virtual objects, to generate the virtual parking space box, wherein the preset operation comprises a sliding operation and a dragging operation.

10. The apparatus (90) according to claim 8, wherein the apparatus further comprises a determination module (904), wherein
the determination module (904) is configured, in response to that there is a physical parking space box in the target environment, to determine a position of the physical parking space box in the target environment as the target position.

11. The apparatus (90) according to claim 8, wherein the control module (902) is further configured, in response to that the target vehicle is within a target projection range, to control the projection lamp to project the parking space projection box at the target position, wherein the target projection range is composed of maximum projection ranges of respective projection lamps.

12. The apparatus (90) according to claim 8, wherein the acquisition module (901) is further configured to acquire a displacement coefficient, wherein the displacement coefficient is used to characterize a relationship between a first position change and a second position change, the first position change is used to characterize a change situation of the target vehicle travelling from an initial position to a current position, and the second position change is used to characterize a change situation of a projection content in a projection unit of the target vehicle from a first position to a second position, the projection content corresponds to the parking space projection box, the first position corresponds to the initial position, and the second position corresponds to the current position; and
the control module (902) is further configured to adjust a position of the projection content based on the displacement coefficient during the parking process of the target vehicle, so as to control the projection lamp to project the parking space projection box at the target position.

13. The apparatus (90) according to any of claims 8 to 12, wherein the control module (902) is further configured, in response to the illumination intensity being lower than or equal to the illumination intensity threshold, to control the projection lamp to project a preset pattern in the target environment, wherein the preset pattern is used to prompt a parking position of the target vehicle.

14. An electronic device, **characterized in that** the electronic device comprises:
a processor; and
a memory configured to store instructions executable for the processor;
wherein the processor is configured to execute the instructions, to implement the parking assistance method according to any one of claims 1 to 7.

15. A computer-readable storage medium, **characterized in that** the computer-readable storage medium stores instructions, and upon the instructions in the computer-readable storage medium being executed by an electronic device, the electronic device is caused to perform the parking assistance method according to any one of claims 1 to 7.
